# EUROPEAN PATENT SPECIFICATION

(11) **EP 3 216 079 B1**
(45) Date of publication and mention of the grant of the patent: **06.05.2020**
(21) Application number: 14793856.7
(22) Date of filing: 06.11.2014
(51) Int. Cl.: H01M 12/08, B60L 50/72, H01M 8/04007, H01M 8/04119, H01M 16/00

(54) **SYSTEM AND METHOD FOR SUPPLYING ELECTRICAL ENERGY FROM A METAL AIR BATTERY**
SYSTEM UND VERFAHREN ZUR STROMVERSORGUNG AUS EINER METALL-LUFT-BATTERIE
SYSTÈME ET PROCÉDÉ DESTINÉS À ALIMENTER DE L'ÉNERGIE ÉLECTRIQUE PROVENANT D'UNE BATTERIE MÉTAL-AIR

(43) Date of publication of application: 13.09.2017
(73) Proprietor: Bayerische Motoren Werke Aktiengesellschaft, 80809 München (DE)
(72) Inventor: NÜRNBERGER, Simon, 83043 Bad Aibling (DE); LAMP, Peter, 86899 Landsberg am Lech (DE); OBERHUMER, Philipp, 80638 Muenchen (DE); PASCHOS, Odysseas, 80805 München (DE); TSIOUVARAS, Nikolaos, 80798 München (DE); HANDA, Tokuhiko, Tokyo 160-0004 (JP); NISHIKOORI, Hidetaka, Shizuoka 410-1113 (JP); INOUE, Toshihiko, Shizuoka 411-0044 (JP)
(74) Representative: Hahner, Ralph
(86) International application number: PCT/EP2014/073920
(87) International publication number: WO 2016/070925

(56) References cited:
- EP-B1- 1 377 477
- JP-A- 2010 009 896
- US-B1- 8 247 097
- Paul Albertus et al.: "Overview of LiO2 Battery Systems, with a Focus on Oxygen Handling Requirements and Technologies; Chapter 11; Section 11.5" In: "The Lithium Air Battery: Fundamentals", 28 February 2014 (2014-02-28), Springer Science + Business Media, New York, XP008176817, pages 306-308, DOI: 10.1007/978-1-4899-8062-5_11, page 307, line 21 - line 36

## Description

The invention concerns a system and a method for supplying electrical energy, particularly to a vehicle, wherein the system comprises a metal air battery, particularly a lithium air battery operated with ambient air.

Alternatively or additionally, the system can be used in stationary applications, for example as second life reuse after primary utilization in a vehicle.

Electric vehicles, including vehicles with a range extender meaning an internal combustion engine to produce electricity on long voyages, hybrid vehicles and derivates become more and more popular due to ecologic reasons, a limited supply of fossil fuels and research advances.

Particularly, a steady stream of advances in battery research has put large numbers of hybrid electric vehicles on city streets and highways. Additional advances are having a similar effect on so-called plug-in hybrids, hybrid automobiles that can be recharged at home. Despite these successes for electrically propelled cars, both types of hybrid vehicles strongly depend on petroleum-fueled internal combustion engines for distance driving.

In order to fully establish electric vehicles in the market, a storage battery of practical size and weight and affordable price is needed that can provide enough electrical energy in a single charge for a motorist to drive at least a few hundred miles. In light of these requirements, a focus of the electric vehicle industry in battery research is directed to so-called metal air batteries, which are, for example, described in U.S. patent 5,510,209.

These metal air batteries provide a high theoretical electrical capacity, particularly when the oxygen mass is excluded. This means that the oxygen needed for operating the metal air battery has to be taken from the ambient air instead of supplying it from an oxygen reservoir. When generating power, this oxygen reacts at the cathode of a lithium air battery with lithium to LiO₂ and/or Li₂O₂. In this reaction one mole O₂ releases two moles electrons. Nevertheless, oxygen should not diffuse from the cathode to the anode since it penetrates into the anode electrode degrading the anode.

For example, a high oxygen O₂ excess (overpressure) can lead to diffusion of oxygen through an electrolyte to the negative electrode side where it can lead to undesired side-reactions, e.g. with the product Li₂O₂ at the anode. This leads to capacity loss and a limited cycle- and calendar-lifetime of the metal air battery.

Further, when ambient air as O₂-source is utilized to operate a metal air battery in order to achieve the high energy densities desirable for mobile applications such as in vehicles, water and preferably other harmful molecules such as CO₂ have to be reliably removed from the ambient air in order to avoid unwanted (devastating) reactions in the metal air battery, especially if the battery is a lithium air battery.

Even though the high energy density can be maintained with the use of the ambient air, at least a part of the energy available, such as electrical energy stored in the metal air battery, has to be used to dry the ambient air. This reduces the efficiency of a metal air battery considerably.

Therefore, in the prior art, instead of using a drying system to dry the ambient air, the use of oxygen-diffusion membranes is proposed as moisture barriers for the ambient air. For example, U.S. 2011/0059355 A1 discloses a metal air battery with an oxygen-removal membrane completely encasing a metal air battery.

Especially when envisaged for automobile applications, the power response of high capacity batteries such as metal air batteries tends to be slow. In particular the maximum power which can be drawn from such high capacity batteries is not enough to cover peak demands of vehicles, for example when accelerating or climbing an ascending slope. Furthermore, due to the functioning by chemical reaction, a variable control of the output of the high capacity batteries, such as metal air batteries, tends to be difficult since the chemical reaction can be controlled with a certain time-lag only.

In order to be able to better cover variable power rates and enhance the maximum power which can be delivered by an energy storage device, European patent 1 377 477 B1 proposes a power source for supplying electrical power to a driving motor comprising a first rechargeable energy battery and a second rechargeable power battery and a battery controller capable of controlling a substantially continuous recharging of the power battery with electrical energy from the energy battery.

The Publication Paul Albertus et al.: "Overview of Li02 Battery Systems, with a Focus on Oxygen Handling Requirements and Technologies; Chapter 11; Section 11.5" In: "The Lithium Air Battery: Fundamentals", 28 February 2014, Springer Science + Business Media, New York, XP008176817, pages 306-308, proposes a design of an open system for lithium air batteries that removes contaminants from air and sends oxygen and inerts to a cell stack. One technology to separate air described by the document is temperature-swing adsorption. This is an adsorption onto solids, where a zeolite may be used for water (H20) adsorption. Document JP 2010 009896 A refers to a fuel cell system with a phosphoric acid fuel cell using a phosphoric acid electrolyte. In order to operate the fuel cell, the document discloses an air supply unit with an air compressor and two dehumidifying parts, two heating portions and two change-over valves. The air compressor outputs high-pressure air to be supplied to the cathode of the fuel cell via the first switching valve and the first and second dehumidifying parts. Departing from this prior art, it is an object of the present invention to provide a system and a method for supplying electrical energy, particularly in a vehicle, wherein the system comprises a metal air battery, particularly a lithium air battery, operated with ambient air allowing a safe, simple and energy efficient operation for supplying electrical energy. Another object of the present invention is to provide a system capable of covering high power peaks needed to operate an electric propulsion of a vehicle while maintaining high energy efficiency.

These objects are achieved by a system for supplying electrical energy according to claim 1 and a method for supplying electrical energy according to claim 11 of the present invention. Advantageous embodiments of the present invention are claimed in the depending claims.

The invention is based on the approach to use thermal energy produced by the metal air battery of the inventive system to operate a water remover for preparing and drying ambient air which is then delivered to the metal air battery to supply the oxygen needed for the electrochemical reaction at the anode. By the inventive system and method, waste heat produced by a metal air battery can be particularly used for the regeneration of a water removal system operating by absorption dehydration and/or absorption dehydration. Alternatively, the heat produced in the metal air battery can be used for drying the ambient air by condensation drying. With the inventive system and method, the electrical power efficiency of a system for supplying electrical energy comprising a metal air battery is strongly optimized. In case of adsorption/absorption dehydration, the regeneration time of the water remover can be shortened. In every case, smaller air drying/dehumidifying systems can be employed which leads to a volume optimization of the system for supplying electrical energy which is especially advantageous when such a system is used within mobile applications as in vehicles for electrical propulsion purposes. Additionally, in the case of a thermal event or accident in a system for supplying electrical energy comprising a metal air battery, hot gases can be directed towards the water remover where they can be cooled down.

In summary, the invention allows for a safe, simple and energy efficient operation of a system for supplying electrical energy comprising a metal air battery.

In an advantageous embodiment of the inventive system, the first module comprises a line system, particularly a heating circuit, for transporting a medium for transferring thermal energy to the water remover, wherein the first module is adapted to control the regeneration of the water remover. Such a line system allows for an efficient energy transfer from the metal air battery to the water remover.

In a further advantageous embodiment of the inventive system, the medium is an exhaust gas of the metal air battery and/or water. In this embodiment, exhaust gas of the metal air battery is used to regenerate the water remover. This is especially beneficial because the exhaust gas of the metal air battery has an extremely low humidity, respectively is free of water, which is inherent to the system and has a high temperature accelerating the drying process in the water remover. Since the exhaust gases are extremely dry, the energy requirement in the case of the regeneration of an adsorbent/absorbent material in the water remover can be highly reduced due to the fact that temperature requirements for drying when using extremely dry air are low.

In a further advantageous embodiment of the inventive system, the first module comprises at least one heat exchanger to transfer thermal energy by a medium to the water remover. In this embodiment, thermal energy, particular waste heat, from the metal air battery is transferred to the water remover. This embodiment is especially advantageous if the medium is water and the water remover operates by condensation drying, where a heat exchange in a condensation system has to be managed.

The water remover comprises a water uptaking material, where the water remover, particularly its water uptaking material, is adapted to be regenerated by thermal energy and the water remover comprises a structure, particularly a honeycomb structure, on which the water uptaking material is loaded. In this embodiment, water of the ambient air is bound to the water uptaking material while a stream of ambient air is streamed through a structure on which the water uptaking material is loaded.

In a further advantageous embodiment of the inventive system, the water up-taking material in the water remover is a water adsorbent material, preferably silicate, and more preferably zeolite. These materials are particularly adapted to adsorb water from the ambient air and can be regenerated by inducing heat and/or dry air.

In a further advantageous embodiment of the inventive system, the water remover operates by condensation drying. The condensation drying has the advantage that the water remover can operate without a regeneration phase constantly.

In a further advantageous embodiment of the inventive system, the metal air battery is a high capacity battery, wherein the system further comprises a high power energy storage battery, preferably a lithium ion battery, a supercapacitor, and/or any other electrochemical energy storage device. Preferably, the high capacity battery and the high power battery form a battery hybrid system in which the high capacity battery preferably is adapted to provide a substantially constant first electrical power and the high power battery is adapted to provide temporary a variable second electrical power. Further preferably, the second electrical power is higher than the first electrical power and/or specific energy density of the high capacity battery is 1,5 to 200 times, preferably 1,5 to 50 times, more preferably of 1,5 to 10 times and even more preferably 1,5 to 4,5 times, higher as specific energy density of the high power battery, whereas the high power battery preferably has at least a 3 times higher rate capability. Such battery hybrid system provides a large range of advantages with respect to operating an application where a lot of different power requirements have to be covered, such as in vehicles with electrical propulsion.

The first module is further adapted to redirect thermal energy, particularly waste heat, of the high power battery towards the water remover.

In a further advantageous embodiment of the inventive system, the system further comprises an internal combustion engine, particularly a range extender, wherein the first module is further adapted to redirect thermal energy, particularly waste heat, from the internal combustion engine to the water remover, particularly by integrating a cooling circuit of the internal combustion engine in a heating circuit of the first module.

By integrating further elements of the inventive system in the thermal energy recovery for water removal, the energy efficiency of the inventive system can be raised even more. Alternatively or additionally a cooling circuit of an air compressor or an air cooling system can be included to transfer thermal energy to the water remover. For example, an additional compressor may be in place in case the pressure drop of the supplied air inside the metal air battery is too large.

In a further advantageous embodiment of the inventive system, the system further comprises an additional heater to supply the water remover with additional thermal energy. An additional heater, operated for example with electrical energy from a high power battery or a high capacity battery or with thermal energy from at least one element of the inventive system or vehicle producing waste thermal energy, is especially advantageous during a starting process of the operation of a metal air battery, when no thermal energy of the different elements of the car is yet delivered to the water remover. Such an additional heater may be indispensable in the case of regions where the temperature of the ambient air tends to be low.

The aspects of the invention and the respective disclosed features with respect to the inventive system are also valid for the aspects of the invention and the respective advantageous embodiments of a vehicle comprising electrical propulsion and a method for supplying electrical energy vice versa.

In a preferred embodiment of an inventive vehicle, a first module is adapted to redirect waste thermal energy from further heat sources, particularly the electric propulsion and/or power electronics, in the vehicle to the water remover, particularly by integrating the respective heat sources in a heating circuit.

According to an advantageous embodiment of the inventive method, the water is removed by adsorption dehumidification and/or absorption dehumidification and the method comprises preferably the further step of regenerating the water remover, particularly water adsorbent material and/or water absorbent material of the water remover, by thermal energy.

In a further advantageous embodiment of the present invention, the water is removed by condensation drying utilizing the thermal energy of the metal air battery.

In a further advantageous embodiment of the present invention, the inventive method further comprises the steps of supplying a substantially constant first electrical power by the metal air battery, preferably a lithium air battery, wherein the metal air battery is a high capacity battery and supplying a variable second electrical power by a high power battery, preferably a lithium ion battery. Furthermore, the method preferably comprises the steps of adapting the supplied second electrical power to the electrical power demand of a load, particularly an electrical propulsion system, and controlling the redirecting of the thermal energy based on the electrical power demand.

In a further advantageous embodiment of the inventive method, the method further comprises the steps of controlling, if a medium for redirecting thermal energy is hot enough for a sufficient regeneration of the water remover, and heating the water remover and/or medium with an additional heater, if the medium is too cold.

In a further advantageous embodiment of the inventive method, thermal energy of the high power battery and/or the public grid is supplied through an additional heater to the water remover for starting up the metal air battery.

In a further advantageous embodiment of the inventive method, the method further comprises the steps of supplying a substantially constant first electrical power by the metal air battery, preferably a lithium air battery, wherein the metal air battery is a high capacity battery, and supplying a variable second electrical power by a high power battery, preferably a lithium ion battery. Preferably, the method further comprises the step of determining a power demand of a load, particularly electrical propulsion, and charging the high power battery with electrical energy from the high capacity battery, if the power delivered by the high capacity battery is higher than the power demand of the load.

Further advantageous aspects and examples of the present invention will be apparent from the description of the following figures:
- Figure 1: shows at least partially schematically an example of a first preferred embodiment of the inventive system installed in a vehicle;
- Figure 2: shows partially schematically an example of a second preferred embodiment of the inventive system installed in a vehicle comprising an internal combustion engine;
- Figure 3: shows partially schematically the preferred embodiment of a water remover operating by dehumidification; and
- Figure 4: shows partially schematically a sequence of steps representing the preferred embodiment of the inventive method.

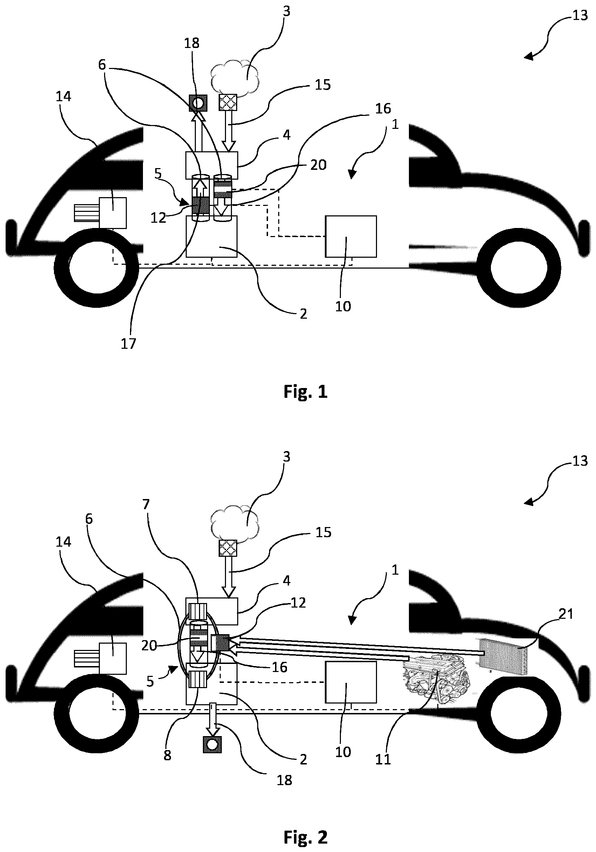

Figure 1 shows a first embodiment of an inventive system 1 for supplying electrical energy in a vehicle 13.

The system 1 preferably comprises a metal air battery 2, particularly a lithium air battery. This metal air battery 2 being a high capacity battery is preferably operated in a manner to provide a substantially constant power to the vehicle 13. The oxygen O₂ needed to oxidize the lithium Li when generating electrical energy is taken from ambient air 3. Since the ambient air 3 also comprises water H₂O which could damage the metal air battery 2 when being introduced in the battery 2, a water remover 4 dehumidifies wet air 15 being aspirated, preferably via a filter element, from the ambient air 3. Dried air 16 is then provided to the metal air battery 2, preferably by a line system 6. In the metal air battery 2, oxygen O₂ in the dried air 16 reacts at the cathode of the metal air battery 2 with the lithium Li to LiO₂ or Li₂O₂ releasing electrons which build up a potential supplying electrical power to the vehicle 13. During the reaction in the metal air battery 2, the dried air 16 is heated by reaction energy. Resulting warm dry gas 17, preferably poor in oxygen O₂ or even free of oxygen O₂, is then led back to the water remover 4, preferably via the line system 6. Preferably a compressor 20 is provided to change the pressure of the dry air 16, for example to compensate a pressure loss in the metal air battery 2. The compressed dry air 16 may preferably have to be cooled by a further cooling system in case it exceeds a certain temperature level.

In the water remover 4, the warm dry gas 17 is used to operate a dehumidification or drying process. Thereafter, wet exhaust gas 18 preferably leaves the water remover 4 and also preferably the vehicle 13 via an exhaust pipe. Preferably, this wet exhaust gas 18 is cooler compared to the warm dry gas 17 introduced in the water remover 4.

Preferably, especially during a starting phase of the system 1 for supplying electrical energy, an additional heater 12 may be employed to heat up the warm gas 17 being led to the water remover 4 in order to ensure the functioning of the dehumidification or drying process in the water remover 4. The additional heater 12 is preferably operated with electricity from the electrical network of system 1 and/or of vehicle 13, respectively, which is indicated by dotted lines in Figure 1. The electrical network of the vehicle 13 further preferably comprises a connection to an electrical propulsion 14 as well as the system 1 preferably comprises a further high power battery 10, preferably a lithium ion battery, a super capacitor and/or any other electrochemical energy storage device.

The second preferred embodiment shown in Figure 2 differs from the first embodiment mainly in that the water remover 4 is not directly operated with the warm gas 17 exhausted by the metal air battery 2 but in that the thermal energy, particularly waste heat, of the metal air battery 2 is primarily transferred to the water remover 4 by a heating circuit 6 preferably also being part of the first module 5. Instead of the exhaust gas 17 of the metal air battery 2, an additional carrier medium to transfer thermal energy, particularly water, is used to transfer thermal energy from the metal air battery 2 to the water remover 4. Therefore, the first module 5 comprises preferably a first heat exchanger 7 which is located preferably at or in the metal air battery 2 and adapted to transfer thermal energy from the warm exhaust gas 17 of the metal air battery 2 to the medium in the heating circuit 6. A second heat exchanger 8 is arranged at or in the water remover 4 and is adapted to transfer the thermal energy from the medium in the heating circuit 6 to the operating portion of the water remover 4. The exhaust gas 17 of the metal air battery is preferably ejected in the environment via an exhaust pipe directly from the metal air battery 2 in this second embodiment.

As in the first embodiment, the system 1 preferably comprises an additional heater 12 in order to heat the medium in the heating circuit 6. This additional heater 12 is preferably heated by electricity from the electric network of the inventive system 1 and/or the vehicle 13. Additionally or alternatively, the heat exchanger 8 and/or the additional heater 12 or may also be heated by waste energy produced by an internal combustion engine 11, preferably a range extender which is preferably part of the system 1, or other heat sources in the vehicle, such as the waste heat of a cooling circuit 21.

Further preferably, during operation of the system 1, waste thermal energy from the internal combustion engine 11 may be transferred to the second heat exchanger 8 in or at the water remover 4 such that this thermal energy can also be used for dehydration and/or drying of wet air 15.

The different features as shown in the preferred embodiments in Figure 1 and Figure 2 can be combined without any further ado. In particular, the first preferred embodiment shown in Figure 1 may also comprise a heating circuit 6 as shown in Figure 2 with a first and a second heat exchanger 8a, 8b in or at the metal air battery 2 and the water remover 4, respectively, to not only use the heat in the warm gas 17 of the metal air battery 2 to operate the water remover 4 but to use further thermal energy dissipated by the metal air battery 2 which is not captured by the warm gas 17. Additionally, also in the first embodiment as shown in Figure 1, the system 1 may comprise an internal combustion engine 11 which can be used to transfer further thermal energy to the additional heater 12 or also to a second heat exchanger 8 in or at the water remover 4, the further thermal energy resulting from the combustion while generating electrical energy via a generator or propelling the vehicle 13. Furthermore, the first module 5 of system 1 is preferably adapted to redirect waste thermal energy from further heat sources of the vehicle 13 and/or the system 1, particularly from the electric propulsion 14 and/or of power electronics, to the water remover 4. Preferably, these heat sources are also integrated in a heating circuit 6 as shown in the second embodiment of Figure 2 which is also applicable to the first embodiment shown in Figure 1.

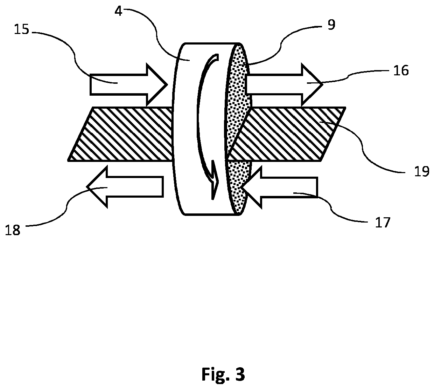

The water remover 4 comprises a water uptaking material which is adapted to be regenerated by thermal energy. As shown in Figure 3, this water up-taking material is loaded on a support structure 9, particularly a honeycomb structure, in the water remover 4. In the preferred embodiment of the water remover 4 shown in Figure 3, the supporting structure 9 forms a rotating wheel rotating with respect to a separating plate 19 around its wheel axis. Preferably, the water uptaking material in the water remover 4 is a water adsorbent material, preferably silicate, and more preferably zeolite, forming a so called rotor adsorption dehumidifier. Alternatively, the water uptaking material may be also an absorbing material. As shown in Figure 3 in this preferred embodiment of the water remover 4, wet air 15 flows through the support structure 9 carrying the adsorbent or absorbent material and leaves the water remover 4 as dry air 16 which is then led to the metal air battery 2 (not shown). The warm gas 17 from the metal air battery 2, poor in oxygen, flows through the rotating wheel of the water remover 4 on the other side of the separating plate 19 and carries away humidity stored in the adsorbent or absorbent material on the supporting structure 9. The wet, cooled down exhaust gas 18 leaves then the water remover 4 on the other side and is led via an exhaust pipe to the environment (not shown). During the dehumidification process in the water remover 4, the rotating wheel with the supporting structure 9 turns constantly as indicated by the arrow on the wheel in Figure 3. Therefore, the adsorbent material or absorbent material on the supporting structure 9 is constantly regenerated while constantly removing water. In a further preferred embodiment, the water remover 4 has to be regenerated during a regeneration phase in which the process of water removal has to be stopped. In this case, there are preferably two water removers 4 in the system 1 such that one can be regenerated while the other one dehumidifies ambient air 3.

In yet another preferred embodiment, the water remover is a condensation dryer utilizing thermal energy delivered by the warm exhaust gas 17 of the metal air battery 2 and/or the heat exchangers 7, 8 to run the condensation process.

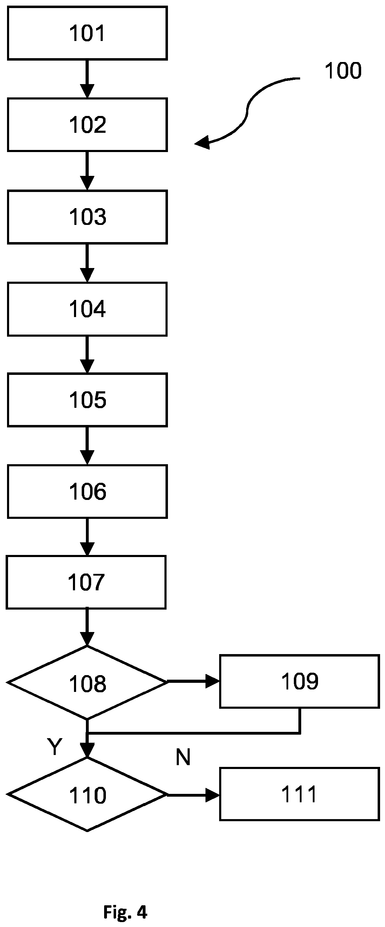

Figure 4 shows a preferred embodiment of the inventive method 100 to operate a system 1 as specified with respect to Figures 1 to 3. It is evident to the person skilled in the art that the steps shown in Figure 2 may be arranged in a different order.

In the inventive method 100, a metal air battery 2, particularly a lithium air battery, is operated with ambient air 3, 101. Water is removed from the ambient air 3 with a water remover 4, 102. The metal air battery 2 preferably supplies a substantially constant first electrical power 103. Further preferably, a variable second electrical power is supplied by a high power battery 10, preferably a lithium ion battery 104. The supplied second electric power is preferably adapted to the demand of load 14, particularly an electrical propulsion 14 of a vehicle 13, 105. Thermal energy, particularly waste heat, from the metal air battery 2 is preferably redirected towards the water remover 4, 106. Preferably, the redirecting of the thermal energy is also controlled based on the electrical power demand 107. Further preferably, after determining the power demand of the load 108, the high power battery 10 is charged with electrical energy from the high capacity battery 2, 109, if the power delivered by the high power battery is higher than the power demand of the load. Preferably, the inventive method 100 comprises a further step of controlling if a medium for redirecting the thermal energy is hot enough for efficient regeneration of the water remover 4 110. If the medium is not hot enough, an additional heater heats the medium 111. The use of the additional heater 12 is especially important during the start-up phase of the system 1, where no thermal energy is supplied to the water remover 4. In this case, further electrical energy of the high power battery 10 and/or the public electricity grid is used to operate the additional heater 12.

### LIST OF REFERENCE NUMERALS

- 1: System
- 2: Metal air battery
- 3: Ambient air
- 4: Water remover
- 5: First module
- 6: Line system
- 7, 8: Heat exchanger
- 9: Supporting structure
- 10: High power battery
- 11: Internal combustion engine
- 12: Additional heater
- 13: Vehicle
- 14: Electrical propulsion
- 15: Wet air
- 16: Dry air
- 17: Warm exhaust gas
- 18: Wet exhaust gas
- 19: Separation plate
- 20: Air compressor
- 21: Cooling system

## Claims

1. System (1) for supplying electrical energy, particularly in a vehicle, comprising:
a metal air battery (2), particularly a lithium air battery, operated with ambient air (3),
a single water remover (4) for constantly removing water from the ambient air (3), comprising a water uptaking material, and
a first module (5) being adapted to redirect waste heat thermal energy of the metal air battery (2) towards the water remover (4),
wherein the water remover (4) is adapted to utilize the waste heat thermal energy for its operation,
wherein the water remover (4), particularly its water uptaking material, is adapted to be regenerated by thermal energy and wherein the water remover (4) comprises a supporting structure (9) on which the water uptaking material is loaded, and
wherein the supporting structure (9) is a wheel rotating with respect to a separating plate (19), the water uptaking material on one side of the separating plate (19) being constantly regenerated while the water uptaking material on the other side of the separating plate (19) constantly removing water.

2. System (1) according to claim 1, wherein the first module (5) comprises
a line system (6), particularly a heating circuit, for transporting a medium for transferring the thermal energy to the water remover, wherein the first module (5) is adapted to control the regeneration of the water remover (4).

3. System (1) according to claim 2, wherein the medium is an exhaust of the metal air battery (2) and/or water.

4. System (1) according to one of the preceding claims, wherein the first module (5) comprises
at least one heat exchanger (7, 8) adapted to transfer thermal energy by a medium to the water remover (4).

5. System (1) according to one of the preceding claims, wherein the supporting structure (9) comprises a honeycomb structure, on which the water uptaking material is loaded.

6. System (1) according to claim 5, wherein an exhaust of the metal air battery (2) flows through the supporting structure (9) to regenerate the water uptaking material.

7. System (1) according to one of claims 1 to 4, wherein the water remover (4) operates by condensation drying.

8. System (1) according one of the preceding claims, further comprising an internal combustion engine (11), particularly a range extender, wherein the first module (5) is further adapted to redirect thermal energy, particularly waste heat, from the internal combustion engine (11) to the water remover (4), particularly by integrating a cooling circuit of the internal combustion engine (11) in a heating circuit (6) of the first module (5).

9. System (1) according one of the preceding claims, further comprising an additional heater (12) to supply the water remover (4) with additional thermal energy.

10. Vehicle (13) comprising electrical propulsion (14), wherein electrical energy used for the electrical propulsion (14) is stored in a system (1) according to one of claims 1 to 9.

11. Method (100) for supplying electrical energy, particularly in a vehicle, comprising the following steps:
operating (101) a metal air battery (2), particularly a lithium air battery, with ambient air (3);
removing (102) water from the ambient air (3) constantly with a single water remover (4) adapted to utilize thermal energy for its operation, and
redirecting (106) waste heat thermal energy of at least the metal air battery (2) towards the water remover (4).

12. Method (100) according to claim 11, wherein the water is removed (101) by adsorption dehumidification and/or absorption dehumidification and further comprising the step of:
regenerating (103) the water remover (4), particularly a water adsorbent material and/or a water absorbent material of the water remover (4), by thermal energy.

13. Method (100) according to claim 12, further comprising the following steps:
rotating a supporting structure (9) in the form of a wheel with respect to a separating plate (19), the water adsorbent material and/or water absorbent material on one side of the separating plate (19) being constantly regenerated while the water adsorbent material and/or water absorbent material on the other side of the separating plate (19) constantly removing water.

14. Method (100) according to claim 12, wherein the water is removed by condensation drying utilizing the thermal energy of the metal air battery (2).

## Patentansprüche

1. System (1) zum Bereitstellen von elektrischer Energie, insbesondere in einem Fahrzeug, aufweisend:
eine Metall-Luft-Batterie (2), insbesondere eine Lithium-Luft-Batterie, die mit Umgebungsluft (3) betrieben wird,
einen einzelnen Wasserentferner (4) zur konstanten Entfernung von Wasser aus der Umgebungsluft (3), der ein wasseraufnehmendes Material aufweist, und
ein erstes Modul (5), das geeignet ist, thermische Abwärmeenergie der Metall-Luft-Batterie (2) zum Wasserentferner (4) hin umzuleiten,
wobei der Wasserentferner (4) geeignet ist, die thermische Abwärmeenergie für seinen Betrieb zu nutzen,
wobei der Wasserentferner (4), insbesondere sein Wasseraufnahmematerial, geeignet ist, durch thermische Energie regeneriert zu werden, und wobei der Wasserentferner (4) eine Stützstruktur (9) aufweist, auf die das Wasseraufnahmematerial aufgebracht ist, und
wobei die Stützstruktur (9) ein Rad ist, das sich relativ zu einer Trennplatte (19) dreht, wobei das Wasseraufnahmematerial auf einer Seite der Trennplatte (19) ständig regeneriert wird, während das Wasseraufnahmematerial auf der anderen Seite der Trennplatte (19) ständig Wasser entfernt.

2. System (1) nach Anspruch 1, wobei das erste Modul (5) ein Leitungssystem (6) aufweist, insbesondere einen Heizkreislauf, zum Transport eines Mediums zur Übertragung der Wärmeenergie auf den Wasserentferner, wobei das erste Modul (5) dazu geeignet ist, die Regeneration des Wasserentferners (4) zu steuern.

3. System (1) nach Anspruch 2, wobei das Medium eine Abluft der Metall-Luft-Batterie (2) und/oder Wasser ist.

4. System (1) nach einem der vorhergehenden Ansprüche, wobei das erste Modul (5)
mindestens einen Wärmetauscher (7, 8) aufweist, der geeignet ist, Wärmeenergie durch ein Medium auf den Wasserentferner (4) zu übertragen.

5. System (1) nach einem der vorstehenden Ansprüche, wobei die Stützstruktur (9) eine Wabenstruktur aufweist, auf die das wasseraufnehmende Material aufgebracht ist.

6. System (1) nach Anspruch 5, bei dem eine Abluft der Metall-Luft-Batterie (2) durch die Stützstruktur (9) strömt, um das wasseraufnehmende Material zu regenerieren.

7. System (1) nach einem der Ansprüche 1 bis 4, wobei der Wasserentferner (4) durch Kondensationstrocknung funktioniert.

8. System (1) nach einem der vorstehenden Ansprüche, das ferner einen internen Verbrennungsmotor (11) aufweist, insbesondere einen Range-Extender, wobei das erste Modul (5) ferner geeignet ist, thermische Energie, insbesondere Abwärme, vom internen Verbrennungsmotor (11) zum Wasserentferner (4) umzuleiten, insbesondere durch Integration eines Kühlkreislaufs des Verbrennungsmotors (11) in einen Heizkreislauf (6) des ersten Moduls (5).

9. System (1) nach einem der vorstehenden Ansprüche, das ferner einen zusätzlichen Erhitzer (12) zur Versorgung des Wasserentferners (4) mit zusätzlicher Wärmeenergie aufweist.

10. Fahrzeug (13) mit elektrischem Antrieb (14), wobei die für den elektrischen Antrieb (14) verwendete elektrische Energie in einem System (1) nach einem der Ansprüche 1 bis 9 gespeichert wird.

11. Verfahren (100) zum Bereitstellen elektrischer Energie, insbesondere in einem Fahrzeug, aufweisend die folgenden Schritte:
Betreiben (101) einer Metall-Luft-Batterie (2), insbesondere einer Lithium-Luft-Batterie, mit Umgebungsluft (3);
ständiges Entfernen (102) von Wasser aus der Umgebungsluft (3) mit einem einzelnen Wasserentferner (4), der geeignet ist, Wärmeenergie für seinen Betrieb zu nutzen, und
Umleitung (106) thermischer Abwärmeenergie mindestens der Metall-Luft-Batterie (2) zum Wasserentferner (4) hin.

12. Verfahren (100) nach Anspruch 11, bei dem das Wasser durch Adsorptionsentfeuchtung und/oder Absorptionsentfeuchtung entfernt wird (101), und das ferner den folgenden Schritt aufweist:
Regenerieren (103) des Wasserentferners (4), insbesondere eines wasseradsorbierenden Materials und/oder eines wasserabsorbierenden Materials des Wasserentferners (4), durch Wärmeenergie.

13. Verfahren (100) nach Anspruch 12, das außerdem die folgenden Schritte aufweist:
Drehen einer Stützstruktur (9) in Form eines Rades relativ zu einer Trennplatte (19), wobei das wasseradsorbierende Material und/oder das wasserabsorbierende Material auf einer Seite der Trennplatte (19) ständig regeneriert wird, während das wasseradsorbierende Material und/oder das wasserabsorbierende Material auf der anderen Seite der Trennplatte (19) ständig Wasser entfernt.

14. Verfahren (100) nach Anspruch 12, wobei das Wasser durch Kondensationstrocknung unter Nutzung der Wärmeenergie der Metall-Luft-Batterie (2) entfernt wird.

## Revendications

1. Système (1) de distribution d'énergie électrique, en particulier dans un véhicule, comprenant :
une batterie métal-air (2), en particulier une batterie lithium-air, fonctionnant avec l'air ambiant (3),
un dispositif d'élimination d'eau unique (4) pour éliminer en continu de l'eau de l'air ambiant (3), comprenant un matériau de prélèvement d'eau, et
un premier module (5) adapté pour rediriger l'énergie thermique de chaleur perdue de la batterie métal-air (2) vers le dispositif d'élimination d'eau (4),
dans lequel le dispositif d'élimination d'eau (4) est adapté pour utiliser l'énergie thermique de chaleur perdue pour son fonctionnement,
dans lequel le dispositif d'élimination d'eau (4), en particulier son matériau de prélèvement d'eau, est adapté pour être régénéré par de l'énergie thermique et dans lequel le dispositif d'élimination d'eau (4) comprend une structure de support (9), sur laquelle le matériau de prélèvement d'eau est chargé, et
dans lequel la structure de support (9) est une roue tournant par rapport à une plaque de séparation (19), le matériau de prélèvement d'eau d'un côté de la plaque de séparation (19) étant régénéré en continu tandis que le matériau de prélèvement d'eau de l'autre côté de la plaque de séparation (19) élimine en continu de l'eau.

2. Système (1) selon la revendication 1, dans lequel le premier module (5) comprend un système en ligne (6), en particulier un circuit chauffant, pour le transport d'un milieu pour transférer l'énergie thermique vers le dispositif d'élimination d'eau, dans lequel le premier module (5) est adapté pour contrôler la régénération du dispositif d'élimination d'eau (4).

3. Système (1) selon la revendication 2, dans lequel le milieu est une émission de la batterie métal-air (2) et/ou de l'eau.

4. Système (1) selon l'une quelconque des revendications précédentes, dans lequel le premier module (5) comprend au moins un échangeur de chaleur (7, 8) adapté pour transférer de l'énergie thermique par un milieu vers le dispositif d'élimination d'eau (4).

5. Système (1) selon l'une quelconque des revendications précédentes, dans lequel la structure de support (9) comprend une structure en nid d'abeilles, sur laquelle le matériau de prélèvement d'eau est chargé.

6. Système (1) selon la revendication 5, dans lequel une émission de la batterie métal-air (2) circule à travers la structure de support (9) pour régénérer le matériau de prélèvement d'eau.

7. Système (1) selon l'une quelconque des revendications 1 à 4, dans lequel le dispositif d'élimination d'eau (4) fonctionne par séchage par condensation.

8. Système (1) selon l'une quelconque des revendications précédentes, comprenant en outre un moteur à combustion interne (11), en particulier un prolongateur d'autonomie, dans lequel le premier module (5) est adapté en outre pour rediriger l'énergie thermique, en particulier la chaleur perdue, depuis le moteur à combustion interne (11) vers le dispositif d'élimination d'eau (4), en particulier en intégrant un circuit de refroidissement du moteur à combustion interne (11) dans un circuit chauffant (6) du premier module (5).

9. Système (1) selon l'une quelconque des revendications précédentes, comprenant en outre un chauffage supplémentaire (12) pour alimenter le dispositif d'élimination d'eau (4) en énergie thermique supplémentaire.

10. Véhicule (13) comprenant une propulsion électrique (14), dans lequel l'énergie électrique utilisée pour la propulsion électrique (14) est stockée dans un système (1) selon l'une quelconque des revendications 1 à 9.

11. Procédé (100) de distribution d'énergie électrique, en particulier dans un véhicule, comprenant les étapes suivantes :
de fonctionnement (101) d'une batterie métal-air (2), en particulier d'une batterie lithium-air, avec de l'air ambiant (3) ;
d'élimination (102) de l'eau de l'air ambiant (3) en continu avec un unique dispositif d'élimination d'eau (4) adapté pour utiliser de l'énergie thermique pour son fonctionnement, et
de redirection (106) de l'énergie thermique de chaleur perdue d'au moins la batterie métal-air (2) vers le dispositif d'élimination d'eau (4).

12. Procédé (100) selon la revendication 11, dans lequel l'eau est éliminée (101) par déshumidification par adsorption et/ou déshumidification par absorption et en outre comprenant les étapes :
de régénération (103) du dispositif d'élimination d'eau (4), en particulier d'un matériau d'adsorption d'eau et/ou d'un matériau d'absorption d'eau du dispositif d'élimination d'eau (4), par l'énergie thermique.

13. Procédé (100) selon la revendication 12, comprenant en outre les étapes suivantes :
de rotation d'une structure de support (9) sous la forme d'une roue par rapport à une plaque de séparation (19), le matériau d'adsorption d'eau et/ou le matériau d'absorption d'eau d'un côté de la plaque de séparation (19) étant régénérés en continu tandis que le matériau d'adsorption d'eau et/ou le matériau d'absorption d'eau de l'autre côté de la plaque de séparation (19) éliminent de l'eau en continu.

14. Procédé (100) selon la revendication 12, dans lequel l'eau est éliminée par séchage par condensation en utilisant l'énergie thermique de la batterie métal-air (2).
